Europäisches Patentamt

European Patent Office

Office européen des brevets

(11) Veröffentlichungsnummer: **0 164 428**
**B1**

# EUROPÄISCHE PATENTSCHRIFT

(45) Veröffentlichungstag der Patentschrift:
07.12.88

(21) Anmeldenummer: 84106628.5

(22) Anmeldetag: 09.06.84

(51) Int. Cl.⁴: **D 21 B 1/32**

(54) **Auflöse-und Sortieranlage für Altpapier.**

(43) Veröffentlichungstag der Anmeldung:
**18.12.85 Patentblatt 85/51**

(45) Bekanntmachung des Hinweises auf die Patenterteilung:
**07.12.88 Patentblatt 88/49**

(84) Benannte Vertragsstaaten:
**AT DE FR GB IT NL SE**

(56) Entgegenhaltungen:
**EP-A- 0 028 658**
**DE-A- 2 651 198**
**FR-A- 2 467 911**
**GB-A- 2 121 703**

(73) Patentinhaber: **Hermann Finckh Maschinenfabrik GmbH
& Co., Marktstrasse 185, D-7417 Pfullingen (DE)**

(72) Erfinder: **Holz, Emil, Metzinger Strasse 51,
D-7412 Eningen (DE)**
Erfinder: **Hutzler, Hagen, Gaussstrasse 3,
D-7410 Reutlingen 1 (DE)**

(74) Vertreter: **Hoeger, Stellrecht & Partner,
Uhlandstrasse 14c, D-7000 Stuttgart 1 (DE)**

**Beschreibung**

Sowohl beim Auflösen von Altpapier, d.h. bei der Umwandlung des Altpapiers in eine Fasersuspension, mittels eines Pulpers (chargenweises Auflösen), als auch mit einer rotierenden, vorn eine Eintrags- und hinten eine Auslassöffnung aufweisenden Trommel mit ungefähr horizontal verlaufender Trommelachse (kontinuierliches Verfahren) wird angestrebt, das Altpapier so lange zu behandeln, dass man einen möglichst hohen Auflösegrad erreicht. Beim Aufbereiten gemischten Altpapiers wird jedoch in das Auflösegerät Material ausserordentlich unterschiedlichen Charakters eingebracht, zu dessen Auflösung entsprechend unterschiedliche Behandlungszeiten erforderlich sind. Arbeitet man mit einer Auflösezeit, in der auch schwer aufzulösendes Material weitgehend in Einzelfasern zerfällt, so ergibt sich ein unwirtschaftlich hoher Energiebedarf, verkürzt man jedoch die Auflösezeiten so, dass nur die leicht aufzulösenden Bestandteile des gemischten Altpapiers weitgehendst in Einzelfasern zerfallen, ergibt sich ein hoher Faserverlust infolge der zumeist noch unaufgelösten anderen Bestandteile des gemischten Altpapiers.

Letzteres trifft vor allem auf eine bekannte Auflöse- und Sortieranlage mit nur einer einzigen, vorn und hinten offenen und um eine ungefähr horizontale Achse drehbaren Trommel zu (DE-2 651 198-A1), bei der die Umfangswand der Trommel in der Einlass-seitigen Trommelhälfte geschlossen und in der Auslass-seitigen Trommelhälfte mit Sieböffnungen überall gleicher Grösse versehen ist. Unter der perforierten Trommelhälfte steht ein quer zur Trommelachse geteilter Auffangbehälter, und von den Trommelenden her ragen in deren Inneres Spritzrohre hinein, von denen das Einlass-seitige mit dem vorderen Teil des Auffangbehälters und einer Verdünnungswasserleitung verbunden ist, während das Auslass-seitige Spritzrohr mit dem hinteren Teil des Auffangbehälters verbunden ist. Ein drittes Auslass-seitiges Spritzrohr ist an eine Waschwasserleitung angeschlossen und erstreckt sich nur über denjenigen Trommelbereich, der über dem hinteren Teil des Auffangbehälters liegt. Diese bekannte Anlage hat eine ganze Reihe von Nachteilen: Beim Einweichen und teilweisen Auflösen des Altpapiers in der ersten, nicht-perforierten Trommelhälfte muss mit derselben Trommeldrehzahl gearbeitet werden wie beim weiteren Auflösen und Sortieren in der zweiten Trommelhälfte; dies ist wegen der völlig unterschiedlichen Vorgänge des Einweichens und Sortierens unzweckmässig. Dasselbe gilt bezüglich der Neigung der Trommelachse von der Einlass- zur Auslassöffnung und damit bezüglich der Aufenthaltsdauer des Altpapiers bzw. des Fasermaterials im nicht-perforierten bzw. perforierten Trommelbereich. Da man ausserdem die Vorgänge des Einweichens, Auflösens und Sortierens zweckmässigerweise bei unterschiedlichen Stoffdichten durchführt, sollten dem eingeweichten Altpapier erhebliche Wassermengen zugeführt werden; dies ist aber mit in das Trommelinnere hineinragenden Spritzrohren ohnehin nur schwer möglich, und ausserdem sind solche, in das Trommelinnere hineinragende Spritzrohre in hohem Masse störanfällig, weil im Altpapier vorhandene Drähte, Schnüre, Folien und dergleichen dazu neigen, sich an den Spritzrohren festzusetzen, wenn das Altpapier von der sich drehenden Trommel umgewälzt und dabei angehoben wird. Schliesslich wird ein erheblicher Teil des nicht in Einzelfasern zerlegten Fasermaterials, welcher die feinen Sieböffnungen der zweiten Trommelhälfte nicht passieren kann, zusammen mit dem sogenannten Spuckstoff, d.h. mit nicht-auflösbaren Anteilen des Altpapiers, am Auslass-seitigen Trommelende zusammen mit dem Spuckstoff aus der Anlage ausgeschleust und geht so verloren.

Es ist nun auch schon eine Auflöse- und Sortieranlage bekanntgeworden (EP-A-0 028 658), bei der verschiedene Geräte für das Einweichen und das Sortieren verwendet werden, nämlich eine Auflöse- und Sortieranlage, welche gemäss dem Oberbegriff des Anspruchs 1 eine Wasserzuführvorrichtung und in Durchlaufrichtung des Altpapiers hintereinander eine erste, um eine ungefähr horizontale Achse drehbare Trommel mit geschlossener Umfangswand als Einweichtrommel zum Mischen von Wasser und Altpapier sowie zum Einweichen des letzteren und eine zweite, vorn und hinten offene, um eine ungefähr horizontale Achse drehbare Trommel mit perforierter Umfangswand zum Aussortieren von Fasermaterial aufweist. Bei dieser bekannten Anlage ist die erste Trommel ein überall geschlossener, mit einer verschliessbaren Öffnung versehener Behälter, in dem das Altpapier chargenweise eingeweicht wird. Von dort gelangt das eingeweichte Altpapier in einen Bunker, in dem es zum Quellen zwischengelagert wird. Auch aus diesem Grund arbeitet diese bekannte Anlage chargenweise. Dann gelangt das Altpapier in einen Mischer, in dem es zusammen mit Verdünnungswasser in rasche Zirkulation versetzt und dabei zumindest teilweise aufgelöst wird, worauf das Fasermaterial in eine vorn und hinten offene, um eine ungefähr horizontale Achse drehbare Sortiertrommel gegeben wird. Bei dieser bekannten Anlage ist es zwar problemlos möglich, beim Einweichen und Sortieren mit unterschiedlichen Trommeldrehzahlen und Stoffdichten zu arbeiten, sie lässt jedoch eine kontinuierliche Verfahrensführung nicht zu, sondern es muss chargenweise gearbeitet werden.

Der Erfindung lag nun die Aufgabe zugrunde, eine für einen kontinuierlichen Betrieb geeignete Auflöse- und Sortieranlage für Altpapier, und zwar insbesondere für gemischtes Altpapier, zu entwickeln, bei der trotz geringeren Energiebedarfs als bei bekannten, für einen kontinuierlichen Betrieb geeigneten Anlagen dennoch vermieden wird, dass ein verhältnismässig grosser Anteil wiederverwendbaren Fasermaterials zusammen mit nicht auflösbaren Altpapieranteilen, wie Drähten, Schnüren, Kunststoffolien und dergleichen, als sogenannter Spuckstoff verworfen wird.

Ausgehend von einer diskontinuierlich arbeitenden Anlage der vorstehend erwähnten Art wird nun erfindungsgemäss vorgeschlagen, zur Lösung der gestellten Aufgabe diese Anlage so auszubilden, dass die auch dem teilweisen Auflösen des Altpapiers dienende Einweichtrommel gleichfalls vorn und hinten offen ist und dass die ebenfalls dem teilweisen Auflösen des Altpapiers dienende Sortiertrommel in Durchlaufrichtung hintereinander einen ersten und einen zweiten Sortierbereich, jeweils mit perforierter Umfangswand, aufweist, wobei die Öffnungen der Umfangswand im ersten Sortierbereich kleiner als die Öffnungen im zweiten Sortierbereich sind, und dass zwischen einer Auffangvorrichtung für die die Öffnungen des zweiten Sortierbereichs passierende Suspension und einer vor dem ersten Sortierbereich der Sortiertrommel liegenden Stelle eine Suspensionsrückführvorrichtung vorgesehen ist, in der sich ein Zerfaserungsgerät befindet. Die Ausbildung der Einweichtrommel als vorn und hinten offene Trommel mit ungefähr horizontaler Achse ermöglicht eine kontinuierliche. Verfahrensführung, im ersten Sortierbereich der Sortiertrommel werden die Fasern der leicht auflösbaren Bestandteile des Altpapiers abgezogen und sind als sogenannter Gutstoff verwendbar, während durch die grösseren Öffnungen des zweiten Sortierbereichs die schwerer vollständig auflösbaren Fasermaterialbestandteile des gemischten Altpapiers von den groben, nicht-auflösbaren Bestandteilen, wie Kunststoffteilen und -folien, Holz-, Metall- und Glasteilen etc., welche den sogenannten Spuckstoff bilden, abgetrennt werden. Wenn man dann die bislang noch nicht vollständig aufgelösten Fasermaterialbestandteile dem Zerfaserungsgerät zuführt, kann die sich dadurch ergebende Fasersuspension vor die von der zweiten Trommel gebildete Sortiervorrichtung zurückgeführt werden. Auch lassen sich die Einweich- und die Sortiertrommel mit unterschiedlichen Drehzahlen betreiben und mit unterschiedlicher Neigung der Trommelachsen anordnen, und durch Drehzahl und Achsenneigung lassen sich die Intensität des Einweich-, Auflöse- und Sortiervorgangs sowie die Durchlaufzeit des Materials durch die betreffende Trommel steuern. Bei dem Zerfaserungsgerät kann es sich um irgendeines der bekannten Geräte zum Auflösen bzw. Zerfasern oder Entstippen handeln.

Bevorzugt wird eine Ausführungsform, bei der zwischen der Einweich- und der Sortiertrommel eine Mischvorrichtung zum Mischen von die Einweichtrommel verlassendem Altpapier und Wasser vorgesehen ist, da beim Einweichen und vorzugsweise auch bei dem in der Einweichtrommel im wesentlichen vor sich gehenden Auflösen bei einer höheren Stoffdichte gearbeitet wird als beim Sortieren, da beim Sortieren die Fasern ja zusammen mit Wasser durch die Sortieröffnungen hindurchtreten sollen, wobei es besonders vorteilhaft ist, wenn die so gebildete Fasersuspension sich bereits mit einer Pumpe weitertransportieren lässt. Die in der Einweichtrommel vorzugsweise gewählte Stoffdichte von ca. 12 bis 25% lässt sich in der Mischvorrichtung durch Zusetzen von Verdünnungswasser auf eine Stoffdichte von max. ca. 6% reduzieren, wobei es sich dann als besonders zweckmässig erwiesen hat, in der Sortiertrommel vor dem ersten Sortierbereich einen Mischbereich mit geschlossener Umfangswand vorzusehen, so dass auch in der Sortiertrommel vor dem Sortieren nocheinmal kräftig gemischt und das Fasermaterial soweit wie möglich aufgelöst wird.

Da der vom zweiten Sortierbereich zurückzuführende Stoffstrom eine geringere Stoffdichte als der die Einweichtrommel verlassende Stoff aufweist, empfiehlt es sich ferner, dass die Rückführvorrichtung die dem zweiten Sortierbereich zugeordnete Auffangvorrichtung mit der Mischvorrichtung zwischen Einweich- und Sortiertrommel verbindet.

Wie bereits erwähnt, kann in der erfindungsgemässen Anlage für den die Öffnungen des zweiten Sortierbereichs passierenden Stoffstrom ein beliebiges der bekannten Zerfaserungsgeräte verwendet werden. Bei einer bevorzugten Ausführungsform der erfindungsgemässen Anlage ist das Zerfaserungsgerät jedoch so ausgebildet, dass es auf einer antreibbaren Welle einen Auflöserotor und einen Pumpenmotor aufweist, dass der letztere von einem Gehäuse mit einem Einlass für die Suspension umfangen ist, welches einen Auslass für vor den ersten Sortierbereich zurückzupumpende Suspension besitzt, und dass der in Strömungsrichtung vor dem Pumpenmotor befindliche Auflöserotor mit Reiss- oder Schneidkanten versehen ist. Ein solches Zerfaserungsgerät könnte über eine Rohrleitung mit der unter dem zweiten Sortierbereich angeordneten Auffangvorrichtung verbunden sein; bevorzugt wird jedoch eine Ausführungsform, bei der die Auffangvorrichtung als unter dem zweiten Sortierbereich der Sortiertrommel angeordneter Auffangbehälter ausgebildet ist und das Gehäuse des Zerfaserungsgeräts sich in diesen Auffangbehälter hinein öffnet.

Es ist natürlich am einfachsten, wenn man einer Wiederaufbereitungsanlage für Altpapier letzteres direkt in der üblichen Anlieferform, nämlich in Form von Altpapierballen, zuführen kann, welche, wie man weiss, ungefähr Quaderform besitzen, aus gepresstem Altpapier bestehen und durch Drähte oder Metallbänder zusammengehalten werden. Bislang war es üblich, die Altpapierballen in sog. Ballenzerreissern zu zerkleinern, die in einem Gehäuse mehrere, einzeln angetriebene Schnecken aufweisen, durch die die Ballen zerrissen werden. Diese bekannten Ballenzerreisser sind jedoch in ihrer Herstellung und Steuerung kompliziert und deshalb teuer, da infolge der Drähte, Metallbänder und dergleichen die Schnecken dazu neigen, sich im Gehäuse zu verklemmen, worauf durch die Steuerung die Drehrichtung der Schnecken automatisch umgekehrt werden muss. In den bekannten Wiederaufbereitungsanlagen werden dann die Bestandteile der zerrissenen Altpapierballen auf einem Transportband weitergeleitet. Die herkömmlichen Ballenzerreisser sind aber nicht nur aufwendig und störanfällig, sondern sie führen zu einer starken Staubentwicklung und damit zu einer nicht unerheblichen Brandgefahr.

Bei einer bevorzugten Ausführungsform der erfindungsgemässen Anlage ist nun unmittelbar vor der Einweichtrommel ein Zerteilgerät für Altpapierballen angeordnet, welches ein Gehäuse mit einer oberen Einwurf- und einer unteren Auslassöffnung sowie auf einer die Gehäusewand durchsetzenden Welle eine Zerteilscheibe aufweist, welche mit Reiss- oder Schneidkanten versehen ist, und, anders als die Schnecken der bekannten Ballenzerreisser, nicht blockieren kann.

Um zu verhindern, dass sich Drähte, Schnüre und dergleichen um die die Zerteilscheibe tragende Welle wickeln können, besitzt die Zerteilscheibe eine dem Gehäuseinnern zugewandte Arbeitsseite sowie eine an die Gehäusewand eng anschliessende Rückseite, wobei zweckmässigerweise zwischen dem Umfangsrandbereich dieser Rückseite und der benachbarten Gehäusewand eine sog. Labyrinthdichtung vorgesehen wird. Um eine Staubentwicklung und damit verbundende Brandgefahr auszuschliessen, besitzt das Zerteilgerät eine Wasserspritzvorrichtung, was den zusätzlichen Vorteil mit sich bringt, dass bereits im Zerteilgerät eine gewisse Voreinweichung des Altpapiers stattfindet.

Statt den gesamten, aus dem Zerfaserungsgerät austretenden Stoffstrom vor den ersten Sortierbereich der Sortiertrommel zurückzuführen, kann die Rückführvorrichtung einen Wuchtschüttler enthalten, dessen Sieb vorzugsweise kleinere Öffnungen als der zweite Sortierbereich aufweist und vor allem bei starker Verschmutzung des Altpapiers vermeidet, dass der ganze Schmutz wieder in die Sortiertrommel gelangt; zu dieser wird dann nur derjenige Teil des Stoffstroms zurückgeführt, der die Öffnungen des Wuchtschüttlersiebs passiert hat.

Weitere Merkmale, Einzelheiten und Vorteile der Erfindung ergeben sich aus der nachfolgenden Beschreibung sowie der beigefügten zeichnerischen Darstellung einer bevorzugten Ausführungsform der erfindungsgemässen Auflöse- und Sortieranlage; in der Zeichnung zeigen:

Figur 1 eine schematische Gesamtdarstellung der Anlage;

Figur 2 einen Schnitt längs einer Durchmesserebene durch die Zerteilscheibe des vor der Einweichtrommel angeordneten Zerteilgeräts;

Figur 3 einen Schnitt längs einer vertikalen Durchmesserebene des Zerfaserungsgeräts;

Figur 4 einen Schnitt nach der Linie 4–4 in Figur 3 zur Darstellung des Auflöserotors des Zerfaserungsgeräts;

Figur 5 einen Schnitt nach der Linie 5–5 zur Darstellung des Pumpenrotors des Zerfaserungsgeräts, und

Figur 6 einen Schnitt nach der Linie 6–6 in Figur 3.

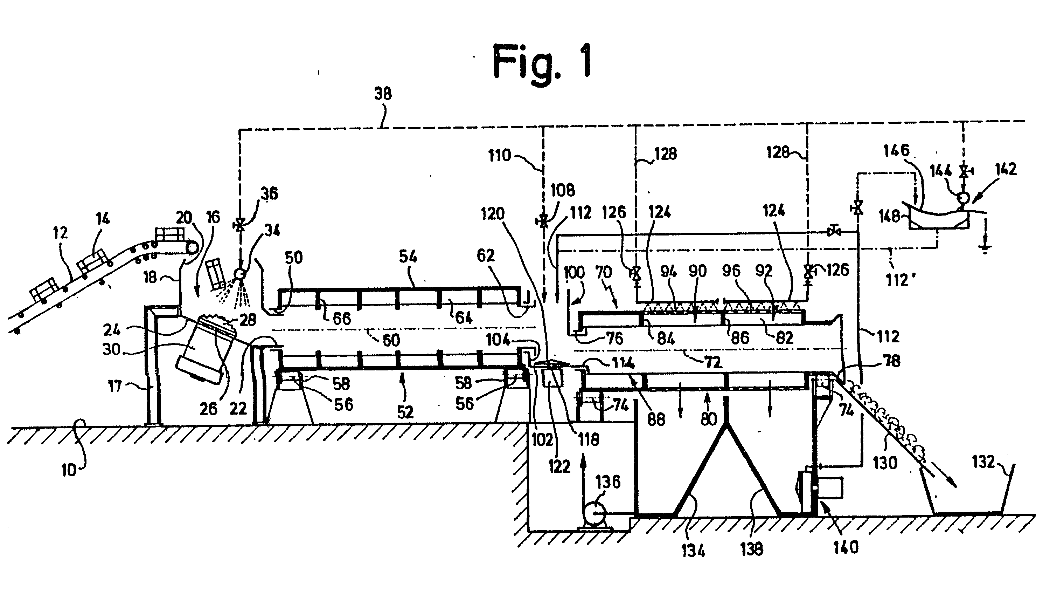

Die in Figur 1 gezeigte, auf einem Gehäuseboden 10 aufgebaute Anlage weist zunächst ein Förderband 12 auf, mit dem Altpapierballen 14 einem Ballen-Zerteilgerät 16 zugeführt werden. Dieses besitzt ein von einem Gestell 17 getragenes, ungefähr trichterförmiges Gehäuse 18 mit einer oberen Einwurföffnung 20, einer unteren Auslassöffnung 22 und einem schrägen Gehäusewandbereich 24, der von einer Antriebswelle 26 für eine Zerteilscheibe 28 durchsetzt wird und an dem ein Motor 30 für den Antrieb der Welle 26 befestigt ist. Im Gehäuse 18 ist ein gleichfalls nur schematisch angedeutetes Spritzrohr 34 angeordnet, welches über ein Ventil 36 an eine Wasser-Versorgungsleitung 38 angeschlossen ist.

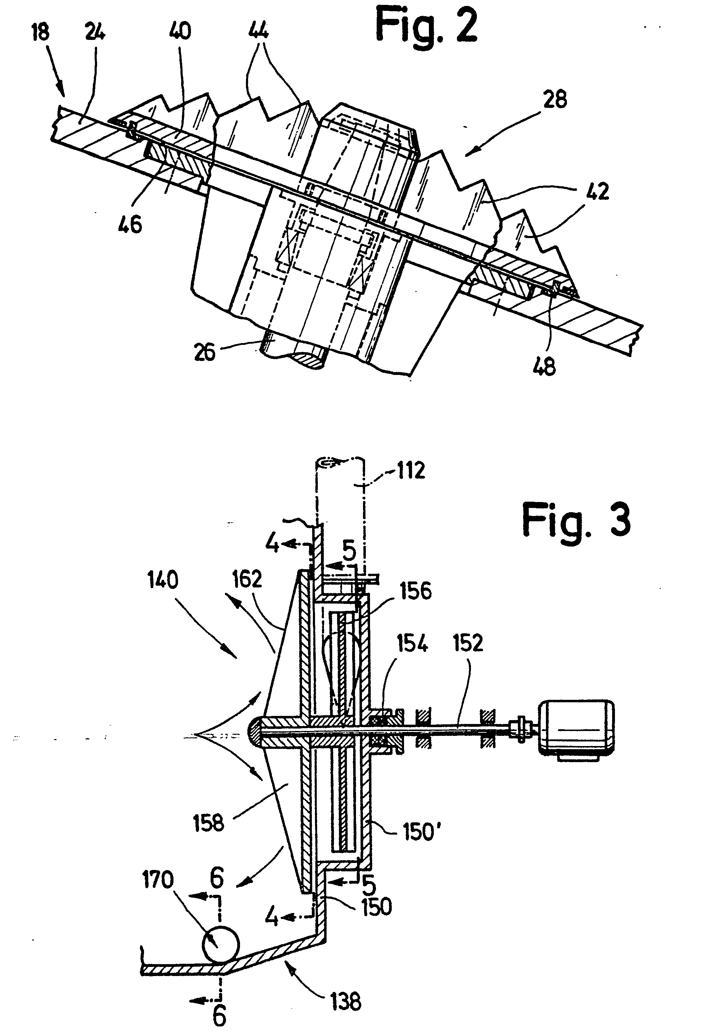

Wie die Figur 2 erkennen lässt, besitzt die Zerteilscheibe 28 eine auf der Antriebswelle 26 befestigte Tragscheibe 40, auf der dem Innern des Gehäuses 18 zugewandte gezackte Leisten 42 mit Reiss- oder Schneidkanten 44 befestigt sind und deren Rückseite 46 zusammen mit dem schrägen Gehäusewandbereich 24 eine Labyrinthdichtung 48 bildet, so dass sich weder Drähte, Schnüre, Kunststoffolien und dergleichen um die Antriebswelle 26 wickeln oder irgendwelche festen Bestandteile in den Spalt zwischen der Tragscheibe 40 und dem Gehäusewandbereich 24 eindringen und so die Zerteilscheibe 28 blockieren können.

Die Auslassöffnung 22 des Zerteilgeräts 16 bildet eine Art Rohrstutzen, welcher in eine Einlassöffnung 50 einer Einweichtrommel 52 hineinragt. Die letztere hat einen geschlossenen Mantel 54, mit dem sie im Bereich ihrer beiden Enden auf Walzenpaaren 56 ruht, die in Gestellen 58 drehbar gelagert sind und durch einen nicht dargestellten Motor so angetrieben werden, dass sie die Einweichtrommel 52 um ihre Längsachse 60 drehen. Die Trommelachse 60 ist gegenüber der Horizontalen leicht geneigt, und zwar mit Gefälle nach rechts (in Fig. 1 nicht erkennbar), wobei der Grad der Neigung einer der für die Aufenthaltszeit des Altpapiers in der Einweichtrommel 52 wichtigen Parameter ist. Zwischen der Einlassöffnung 50 und einer Auslassöffnung 62 verlaufen im Trommelinnern Mitnehmerleisten 64, die z. B. die Form von sich in axialer und radialer Richtung erstreckenden Rippen haben können, sie können gegenüber der Trommellängsrichtung aber auch so geneigt sein, dass sie entsprechend der Drehrichtung der Einweichtrommel 52 einen Fördereffekt gemäss Figur 1 von links nach rechts bewirken. Es ist ausserdem zweckmässig, wenn die Mitnehmerleisten 64 durch radiale Zwischenringe 66 unterbrochen werden, die einen zu raschen Durchlauf des Altpapiers durch die Einweichtrommel 52 verhindern und gegebenenfalls in radialer Richtung nach innen über die Mitnehmerleisten 64 vorstehen können.

Eine der Einweichtrommel 52 nachgeordnete Sortiertrommel 70 unterscheidet sich von der Einweichtrommel 52 nur durch einen teilweise perforierten Mantel, so dass eine kursorische Beschreibung der übereinstimmenden Merkmale genügt. Die Sortiertrommel 70 besitzt eine nach rechts leicht geneigte Achse 72 (in Fig. 1 nicht erkennbar), sie lagernde und antreibende Walzenpaare 74, eine Einlass- und eine Auslassöffnung 76 bzw. 78, einen als Ganzes mit 80 bezeichneten Mantel, Mitnehmerleisten 82 und zwei Zwischenringe 84 und 86, die die Sortiertrommel 70 in einen Mischbereich 88, einen ersten Sortierbereich 90 und einen zweiten Sortierbereich 92 unterteilen. Im Mischbereich 88 ist der Trommelmantel 80 geschlossen, während er in den beiden Sortierbereichen perforiert ist; Öffnungen 94 des ersten Sortierbereichs 90 haben jedoch einen kleineren Durchlassquerschnitt als Öffnungen 96 des zweiten Sortierbereichs 92.

Zwischen der Einweichtrommel 52 und der Sortiertrommel 70 befindet sich eine Mischvorrichtung 100 mit einem Gehäuse 102, welches eine Einlassöffnung 104 besitzt, in die ein die Auslassöffnung 62 der Einweichtrommel 52 bildender Stutzen der Einweichtrommel hineinragt. Von oben führen in das Gehäuse 102 verschiedene Leitungen hinein, nämlich eine mit einem Ventil 108 versehene, von der Versorgungsleitung 38 abzweigende Verdünnungswasserleitung 110 und eine Rückführleitung 112. Schliesslich besitzt das Gehäuse 102 der Mischvorrichtung 100 einen Auslassstutzen 114, der in die Einlassöffnung 76 der Sortiertrommel 70 hineinragt und tiefer als die Auslassöffnung 62 der Einweichtrommel 52 liegt. Durch den Boden des Gehäuses 102 ragt eine Antriebswelle 118 hindurch, die im Gehäuseinnern ein Mischerrad 120 trägt und durch einen Motor 122 angetrieben wird.

Über den Sortierbereichen 90 und 92 der Sortiertrommel 70 sind Spritzrohre 124 angeordnet, welche über Ventile 126 und Verdünnungswasserleitungen 128 an die Versorgungsleitung 38 angeschlossen sind.

Die Auslassöffnung 78 der Sortiertrommel 70 liegt über einer Rutsche 130, welche zu einem Abfallbehälter 132 führt.

Unter dem ersten Sortierbereich 90 der Sortiertrommel steht ein Gutstoffbehälter 134, aus dem brauchbare Fasersuspension durch eine Pumpe 136 abgezogen wird, während unter dem zweiten Sortierbereich 92 ein Auffangbehälter 138 steht, in den ein noch näher zu beschreibendes Zerfaserungsgerät 140 integriert ist. Von diesem führt die Rückführleitung 112 zur Mischvorrichtung 100, wobei für den ganzen oder einen Teil des vom Zerfaserungsgerät 140 kommenden Stoffstroms ein bekannter Wuchtschüttler 142 vorgesehen sein kann, über dem sich ein an die Versorgungsleitung 38 angeschlossenes Spritzrohr 144 befindet und dessen Sieb 146 kleinere Öffnungen als der zweite Sortierbereich 92 aufweist. Ein Auffangbehälter 148 für die das Sieb 146 passierende Fasersuspension ist über eine Rückführleitung 112' mit der Mischvorrichtung 100 verbunden.

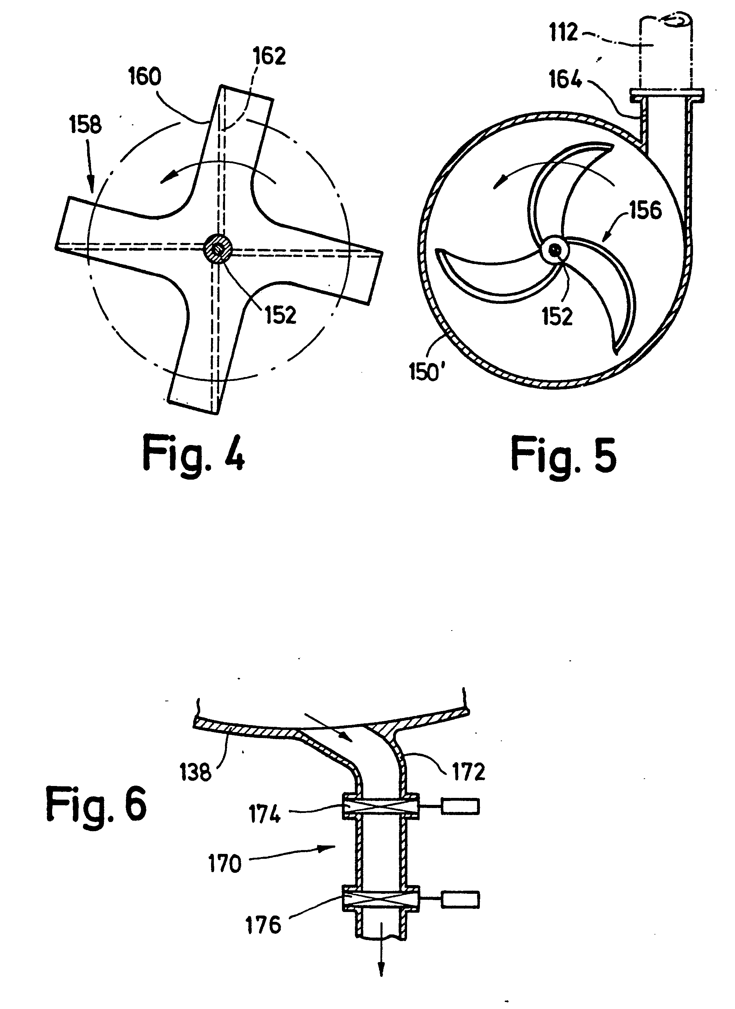

Die Figuren 3 bis 6 dienen der Erläuterung des Zerfaserungsgeräts 140, wobei in Figur 3 die Wand des Auffangbehälters 138 mit 150 bezeichnet wurde. Sie bildet mit einer kreiszylindrischen, verhältnismässig kurzen Ausstülpung ein Pumpengehäuse 150', durch dessen Stirnwand eine Antriebswelle 152, durch eine Stopfbüchse 154 abgedichtet, hindurchgeführt ist. Die Gestaltung eines auf der Antriebswelle 152 befestigten Pumpenrotors 156 kann der Figur 5 entnommen werden, während die Figur 4 einen gleichfalls auf der Welle 152 befestigten Auflöserotor 158 zeigt, der, vom Innern des Auffangbehälters 138 aus gesehen, vor dem Pumpenrotor 156 sitzt und Reissoder Schneidkanten 160, 162 aufweist. Wie sich schliesslich den Figuren 3 und 5 entnehmen lässt, ist an das Pumpengehäuse 150 ein tangential ausgerichteter Auslassstutzen 164 angesetzt, an den sich die Rückführleitung 112 anschliesst. Durch den Auflöserotor 158 wird also der in den Auffangbehälter 138 fliessende Stoffstrom zerfasert bzw. entstippt, worauf der Stoffstrom durch den Pumpenrotor 156 in die Rückführleitung 112 gedrückt wird.

Die Figuren 3 und 6 lassen schliesslich noch erkennen, dass am Boden des Auffangbehälters 138 erfindungsgemäss eine sog. Schwerteilschleuse 170 vorgesehen ist. Diese besteht im wesentlichen aus einem Auslassrohr 172 und zwei im Abstand hintereinander angeordneten Pneumatikschiebern 174 und 176. Durch diese Schwerteilschleuse werden spezifisch schwere Verschmutzungen wie Metallteilchen von Zeit zu Zeit aus dem Bodenbereich des Auffangbehälters 138 abgelassen.

Im folgenden soll noch einmal kurz die Wirkungsweise der gezeigten Anlage zusammengefasst werden.

In dem ein Stahlblechgehäuse 18 aufweisenden Zerteilgerät 16 werden die Altpapierballen 14 durch die schnell rotierende Zerteilscheibe 28 zerrissen: Fällt ein Altpapierballen auf die Zerteilscheibe 28, so wird er kräftig gegen die Wand des Gehäuses 18 geschleudert und dadurch aufgeschlagen, die den Ballen zusammenhaltenden Drähte, Schnüre oder Metallbänder zerreissen und der Ballen zerfällt. Durch das Spritzrohr 34 wird dem Altpapier in gesteuerter Weise soviel Wasser zugeführt, dass sich in der Einweichtrommel 52 eine Stoffdichte von ca. 12 bis 25% einstellt. Dem Wasser können Chemikalien zugefügt sein, um den Auflösevorgang zu beschleunigen.

In der Einweichtrommel 52 wird das Altpapier mit dem Wasser gemischt, eingeweicht, durch die Mitnehmerleisten 64 immer wieder angehoben, worauf es auf den Boden der Trommel herabfällt und dabei zumindest teilweise aufgelöst wird. In der Mischvorrichtung 100 wird die Stoffdichte auf einen Wert bis max. 6% herabgesetzt, und zwar durch Wasser aus der Versorgungsleitung 38 und die durch die Rückführleitung 112 kommende Fasersuspension, welche ja auch eine verhältnismässig geringe Stoffdichte aufweist.

Fasermaterial und Verdünnungswasser werden nicht nur durch das Mischerrad 120 miteinander vermischt, sondern auch im Mischbereich 88 der Sortiertrommel 70. Mit Unterstützung der Spritzrohre 124 werden nun im ersten Sortierbereich 90 die vollständig aufgelösten Bestandteile des Faserstoffs abgesondert und gelangen in den Gutstoffbehälter 134, während noch nicht vollständig aufgelöstes Fasermaterial im zweiten Sortierbereich 92 die Sortiertrommel verlässt und in den Auffangbehälter 138 gelangt. Grobe Bestandteile verlassen die Sortiertrommel schliesslich über die Auslassöffnung 78 und kommen in den Abfallbehälter 132. Das noch nicht vollständig aufgelöste, im Auffangbehälter 138 befindliche Fasermaterial sowie sog. Stippen werden durch das Zerfaserungsgerät 140 vollends aufgelöst, und der Pumpenrotor 156 des Zerfaserungsgeräts 140 pumpt die so gebildete Fasersuspension zum Wuchtschüttler 142 und zurück in die Mischvorrichtung 100, so dass die brauchbaren Fasern dann im ersten Sortierbereich 90 der Sortiertrommel 70 abgesondert werden.

**Patentansprüche**

1. Auflöse- und Sortieranlage für Altpapier, welche eine Wasserzufuhrvorrichtung und in Durchlaufrichtung des Altpapiers hintereinander eine erste, um eine ungefähr horizontale Achse drehbare Trommel (52) mit geschlossener Umfangswand (54) als Einweichtrommel zum Mischen von Wasser und Altpapier sowie zum Einweichen des letzteren und eine zweite, vorn und hinten offene, um eine ungefähr horizontale Achse (72) drehbare Trommel (70) mit perforierter Umfangswand (80) zum Aussortieren von Fasermaterial aufweist, dadurch gekennzeichnet, dass die auch dem teilweisen Auflösen des Altpapiers dienende Einweichtrommel (52) gleichfalls vorn und hinten offen ist und dass die ebenfalls dem teilweisen Auflösen des Altpapiers dienende Sortiertrommel (70) in Durchlaufrichtung hintereinander einen ersten und einen zweiten Sortierbereich (90 bzw. 92), jeweils mit perforierter Umfangswand (80), aufweist, wobei die Öffnungen (94) der Umfangswand im ersten Sortierbereich (90) kleiner als die Öffnungen (96) im zweiten Sortierbereich (92) sind, und dass zwischen einer Auffangvorrichtung (138) für die die Öffnungen (96) des zweiten Sortierbereichs (92) passierende Suspension und einer vor dem ersten Sortierbereich (90) der Sortiertrommel (70) liegenden Stelle eine Suspensionsrückführvorrichtung (140, 112) vorgesehen ist, in der sich ein Zerfaserungsgerät (140) befindet.

2. Anlage nach Anspruch 1, dadurch gekennzeichnet, dass die Sortiertrommel (70) vor dem ersten Sortierbereich (90) einen Mischbereich (88) mit geschlossener Umfangswand aufweist.

3. Anlage nach Anspruch 1 oder 2, dadurch gekennzeichnet, dass zwischen der Einweich- und der Sortiertrommel (52 bzw. 70) eine Mischvorrichtung (100) zum Mischen von die Einweichtrommel (52) verlassendem Altpapier und Wasser vorgesehen ist.

4. Anlage nach Anspruch 3, dadurch gekennzeichnet, dass die Rückführvorrichtung (140, 112) die Auffangvorrichtung (138) mit der Mischvorrichtung (100) verbindet.

5. Anlage nach einem oder mehreren der Ansprüche 1 bis 4, dadurch gekennzeichnet, dass das Zerfaserungsgerät (140) auf einer antreibbaren Welle (152) einen Auflöserotor (158) und einen Pumpenrotor (156) aufweist, dass der letztere von einem Gehäuse (150′) mit einem Einlass für die Suspension umfangen ist, welches einen Auslass (164) für die vor den ersten Sortierbereich (90) zurückzupumpende Suspension besitzt, und dass der in Strömungsrichtung vor dem Pumpenrotor (156) befindliche Auflöserotor (158) mit Reiss- oder Schneidkanten (160, 162) versehen ist.

6. Anlage nach Anspruch 5, dadurch gekennzeichnet, dass die Auffangvorrichtung (138) als unter dem zweiten Sortierbereich (92) der Sortiertrommel (70) angeordneter Auffangbehälter ausgebildet ist und das Gehäuse des Zerfaserungsgeräts (140) sich in diesen Auffangbehälter hinein öffnet.

7. Anlage nach einem oder mehreren der Ansprüche 1 bis 6, dadurch gekennzeichnet, dass unmittelbar vor der Einweichtrommel (52) ein Zerteilgerät (16) für Altpapierballen angeordnet ist, welches ein Gehäuse (18) mit einer oberen Einwurf- und einer unteren Auslassöffnung (20 bzw. 22) sowie auf einer die Gehäusewand durchsetzenden Welle (26) eine Zerteilscheibe (28) aufweist, welche mit Reiss- oder Schneidkanten (44) versehen ist.

8. Anlage nach Anspruch 7, dadurch gekennzeichnet, dass die Zerteilscheibe (28) eine dem Gehäuseinnern zugewandte Arbeitsseite sowie eine an die Gehäusewand (24) eng anschliessende Rückseite (46) aufweist.

9. Anlage nach Anspruch 7 oder 8, dadurch gekennzeichnet, dass das Zerteilgerät (16) zwischen Einwurf- und Auslassöffnung (20, 22) einen beiden Öffnungen schräg zugewandten Gehäusewandbereich (24) aufweist, an den sich die Rückseite (46) der Zerteilscheibe (28) eng anschliesst.

10. Anlage nach Anspruch 8 oder 9, dadurch gekennzeichnet, dass zwischen dem Umfangsrandbereich der Zerteilscheibenrückseite (46) und der Gehäusewand (24) eine Labyrinthdichtung (48) vorgesehen ist.

11. Anlage nach einem oder mehreren der Ansprüche 7 bis 10, dadurch gekennzeichnet, dass das Zerteilgerät (16) eine Wasserspritzvorrichtung (34) aufweist.

12. Anlage nach einem oder mehreren der vorstehenden Ansprüche, dadurch gekennzeichnet, dass die Rückführvorrichtung (112) einen Wuchtschüttler (142) enthält, dessen Sieb (146) kleinere Öffnungen als der zweite Sortierbereich (92) aufweist.

**Claims**

1. Apparatus for dissolving and sorting waste paper, comprising a water supply means, a first drum (52) as steeping drum for mixing water and waste paper as well as for steeping said waste paper, said first drum being rotatable about an approximately horizontal axis and including a closed circumferential wall (54), and a second drum (70) for sorting out fibrous material, said second drum being open to the front and back, rotatable about an approximately horizontal axis (72) and including a perforated circumferential wall (80), said drums being arranged one behind the other in the direction of flow of the waste paper, characterized in that said steeping drum (52) which also serves to partially dissolve said waste paper is likewise open to the front and back and that the sorting drum (70) which likewise serves to partially dissolve said waste paper comprises first and second sorting zones (90 and 92) arranged one behind the other in said direction of flow, each of said sorting zones having a perforated circumferential wall (80), the openings (94) of the circumferential wall in said first sorting zone (90) being smaller than the openings (96) in said second sorting zone (92), and that a suspension return means (140, 112) including a defiberizing device (140) is provided between a collecting means (138) for the suspension passing through said openings (96) in said second sorting zone (92) and an area located upstream of said first sorting zone (90) of said sorting drum (70).

2. Apparatus as defined in claim 1, characterized in that said sorting drum (70) comprises a mixing area (88) with a closed circumferential wall upstream of said first sorting zone (90).

3. Apparatus as defined in claim 1 or 2, characterized in that a mixing means (100) for mixing waste paper leaving the steeping drum (52) with water is provided between said steeping drum (52) and said sorting drum (70).

4. Apparatus as defined in claim 3, characterized in that said return means (140, 112) connects said collecting means (138) with said mixing means (100).

5. Apparatus as defined in one or more of claims 1 to 4, characterized in that said defiberizing device (140) includes a pulping rotor (158) and a pump rotor (156) both mounted on a driven shaft (152), that said pump rotor is surrounded by a housing (150′) having an inlet for the suspension and an outlet (164) for the suspension to be pumped back to the upstream side of said first sorting zone (90), and that said pulping rotor (158) which is located in front of said pump rotor (156) in said direction of flow is provided with ripping or cutting edges (160, 162).

6. Apparatus as defined in claim 5, characterized in that said collecting means (138) is designed as a collecting tank disposed beneath said second sorting zone (92) of said sorting drum (70) and the housing of said defiberizing device (140) opens into said collecting tank.

7. Apparatus as defined in one or more of claims 1 to 6, characterized in that a device (16) for shredding bales of waste paper is disposed directly in front of said steeping drum (52), said shredding device comprising a housing (18) with an upper feed opening (20) and a lower discharge opening (22) as well as a shredding disc (28) on a shaft (26) penetrating the housing wall, said disc being provided with ripping or cutting edges (44).

8. Apparatus as defined in claim 7, characterized in that said shredding disc (28) has a work side facing the interior of the housing and a reverse side (46) closely adjoining the housing wall (24).

9. Apparatus as defined in claim 7 or 8, characterized in that between its feed opening (20) and its discharge opening (22) said shredding device (16) has an inclined housing wall area (24) facing said two openings, said reverse side (46) of said shredding disc (28) closely adjoining said housing wall area.

10. Apparatus as defined in claim 8 or 9, characterized in that a labyrinth seal (48) is provided between said housing wall (24) and the circumferential edge region of the reverse side (46) of said shredding disc.

11. Apparatus as defined in one or more of claims 7 to 10, characterized in that said shredding device (16) has a water spraying means (34).

12. Apparatus as defined in one or more of the preceding claims, characterized in that said return means (112) includes a Jonsson screen (142) with a sieve (146) having smaller openings than said second sorting zone (92).

**Revendications**

1. Dispositif pour la réduction en pâte et le tri de vieux papiers qui présente un dispositif d'amenée d'eau et situés l'un derrière l'autre dans le sens de parcours des vieux papiers un premier tambour (52) susceptible de tourner autour d'un axe à peu près horizontal avec une paroi périphérique (54) fermée comme tambour de trempage pour le mélange d'eau et de vieux papiers ainsi que pour le trempage de ces derniers et un deuxième tambour (70), ouvert à l'avant et à l'arrière, susceptible de tourner autour d'un axe (72) à peu près horizontal avec une paroi périphérique perforée (80) pour le tri de matériaux fibreux, caractérisé en ce que le tambour de trempage (52) qui sert aussi à la réduction partielle des vieux papiers est de-même ouvert à l'avant et à l'arrière et que le tambour de tri (70) qui sert aussi à la réduction partielle des vieux papiers présente une première et une deuxième zones de tri (90 et 92) situées l'une derrière l'autre dans le sens de parcours, chacune avec une paroi périphérique perforée (80), les ouvertures (94) de la paroi périphérique dans la première zone de tri (90) étant plus petites que les ouvertures (96) dans la deuxième zone de tri (92), et en ce qu'il est prévu entre un dispositif récepteur (138) pour la suspension qui correspond aux ouvertures de la deuxième zone de tri (92) et un emplacement situé avant la première zone de tri (90) du tambour de tri (70) un dispositif de renvoi de suspension (140, 112), dans lequel se trouve un appareil d'effilochage (140).

2. Dispositif selon la revendication 1, caractérisé en ce que le tambour de tri (70) présente une zone de mélange (88) avec périphérie fermée avant la première zone de tri (90).

3. Dispositif selon la revendication 1 ou 2, caractérisé en ce qu'entre les tambours de trempage et de tri (52 et 70) est disposé un dispositif de mélange (100) pour mélanger des vieux papiers quittant le tambour de trempage (52) et de l'eau.

4. Dispositif selon la revendication 3, caractérisé en ce que le dispositif de renvoi (140, 112) relie le dispositif récepteur (138) avec le dispositif de mélange (100).

5. Dispositif selon une ou plusieurs des revendications 1 à 4, caractérisé en ce que l'appareil d'effilochage (140) présente sur un arbre d'entraînement (152) un rotor de réduction (158) et un rotor de pompage (156), en ce que ce dernier est entouré par un carter (150′) avec une amenée pour la suspension, carter qui possède une décharge (164) pour la suspension qui est à repomper en renvoi en avant de la première zone de tri (90), et en ce que le rotor de réduction (158) qui se trouve dans le sens d'écoulement avant le rotor de pompage (156) est pourvu d'arêtes d'arrachement ou de coupe (160, 162).

6. Dispositif selon la revendication 5, caractérisé en ce que le dispositif récepteur (138) est constitué comme réservoir récepteur disposé sous la deuxième zone de tri (92) du tambour de tri (70) et que le carter de l'appareil d'effilochage (140) s'ouvre dans ce réservoir récepteur.

7. Dispositif selon une ou plusieurs des revendications 1 à 6, caractérisé en ce qu'immédiatement avant le tambour de trempage (52) est disposé un appareil de fragmentation (16) de balles de vieux papiers, qui présente un carter (18) avec une ouverture supérieure d'alimentation et une ouverture inférieure de décharge (20 et 22) ainsi que sur un arbre (26) traversant la paroi de carter un disque de fragmentation (28) qui est pourvu d'arêtes d'arrachement ou de coupe (44).

8. Dispositif selon la revendication 7, caractérisé en ce que le disque de fragmentation (28) présente une face de travail tournée vers l'intérieur du carter ainsi qu'une face arrière (46) adjacente à la paroi de carter (24).

9. Dispositif selon la revendication 7 ou 8, caractérisé en ce que le dispositif de fragmentation (16) présente entre les ouvertures d'alimentation et de décharge (20, 22) une zone de paroi de carter (24) orientée obliquement par rapport aux deux ouvertures, sur laquelle la face arrière (46) du disque de fragmentation (28) se raccorde de façon étroite.

10. Dispositif selon la revendication 8 ou 9, caractérisé en ce qu'entre la zone de bord périphérique de la face arrière du disque de fragmentation (46) et la paroi de carter (24) est disposé un joint à labyrinthe (48).

11. Dispositif selon une ou plusieurs des revendications 7 à 10, caractérisé en ce que le dispositif de fragmentation (16) présente un dispositif de pulvérisation d'eau (34).

12. Dispositif selon une ou plusieurs des revendications précédentes, caractérisé en ce que le dispositif de renvoi (112) contient un secoueur vibrant (142) dont le tamis (146) présente des ouvertures plus petites que la deuxième zone de tri (92).

# Fig. 1

EP 0 164 428 B1

# Fig. 2

# Fig. 3

11

Fig. 4

Fig. 5

Fig. 6